(19) Europäisches Patentamt European Patent Office Office européen des brevets

(11) **EP 4 644 455 A1**

(12) **EUROPEAN PATENT APPLICATION**
published in accordance with Art. 153(4) EPC

(43) Date of publication:
**05.11.2025 Bulletin 2025/45**

(21) Application number: **23911374.9**

(22) Date of filing: **31.10.2023**

(51) International Patent Classification (IPC):
*C08G 59/50* (2006.01)    *C09D 163/00* (2006.01)

(52) Cooperative Patent Classification (CPC):
**C08G 59/50; C09D 163/00**

(86) International application number:
**PCT/JP2023/039172**

(87) International publication number:
**WO 2024/142590 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.12.2022   JP 2022209325**

(71) Applicant: **MITSUBISHI GAS CHEMICAL COMPANY, INC.**
**Chiyoda-ku**
**Tokyo 100-8324 (JP)**

(72) Inventor: **HANAOKA,Takuma**
**Hiratsuka-shi, Kanagawa 254-0016 (JP)**

(74) Representative: **Gille Hrabal**
**Partnerschaftsgesellschaft mbB**
**Patentanwälte**
**Brucknerstraße 20**
**40593 Düsseldorf (DE)**

(54) **EPOXY RESIN CURING AGENT, EPOXY RESIN COMPOSITION, AND COATING AGENT**

(57)    An epoxy resin curing agent containing a reaction composition (A) containing a reaction product of the following component (a12) and component (a3): component (a12): a reaction composition containing a reaction product of a polyalkylene glycol (a1) and a polyepoxy compound having a cyclic structure (a2), and component (a3): a polyamine having a cyclic structure, wherein the mass ratio of the component (a1) to a total amount of the component (a1) and the component (a2), [(a1)/{(a1)+(a2)}], is from 0.28 to 0.50, and the reaction molar ratio between the component (a12) and the component (a3), [(a12)/(a3)], is from 1/4 to 1/2.

EP 4 644 455 A1

**Description**

Technical Field

The present invention relates to an epoxy resin curing agent, an epoxy resin composition, and a paint.

Background Art

A polyamine, and a compound obtained by an addition reaction between a polyamine and an alkenyl compound, an epoxy compound, or the like are known to be useful as an epoxy resin curing agent. An epoxy resin composition with use of the epoxy resin curing agent has been widely used in the paint fields, such as a corrosion-resistant paint for ships, bridges, iron structures on land and sea, in the civil engineering construction fields, such as lining, reinforcement, crack repair materials, sealing materials, injection materials, primers, screeds, topcoats and FRP reinforcement of concrete structures, floor materials of buildings, lining of water supply and sewage systems, paving materials and adhesives, in the electrical and electronic fields, such as die-attach materials and insulation sealants, and in the fiber reinforced plastic fields.

In the paint fields, solvent regulation has been recently strengthened in terms of environment and safety, so that studies on water-based production of paint and improvement in performance of water-based paint have been underway.

For example, PTL 1 discloses that an aqueous epoxy resin system comprising a water-dispersible epoxy resin A having at least one epoxy group per molecule on average and a water-soluble or water-dispersible curing agent B, wherein the curing agent B contains a reaction product of an amine B1 having at least one primary amino group and/or at least one secondary amino group, an adduct B2 of a polyalkylene ether polyol B21 and an epoxide component B22, and an aromatic compound B3 having at least one acidic group selected from the group consisting of a hydroxyl group and a carboxyl group, and a paint containing the above have good corrosion resistance against salt water.

Citation List

Patent Literature

PTL 1: JP 2010-535259 A

Summary of Invention

Technical Problem

A paint is required that a coating film formed therefrom has good appearance, hardness, water resistance, etc. However, coating films made from a water-based paint generally tend to have lower hardness and water resistance than a non-water-based paint, and the technique disclosed in PTL 1 has room for improvement in these respects.

An object of the present invention is to provide an epoxy resin curing agent applicable to a water-based epoxy resin composition, allowing a coating film excellent in appearance, hardness and water resistance to be formed therefrom, and an epoxy resin composition and a paint containing the curing agent.

Solution to Problem

The present inventor has found that an epoxy resin curing agent containing a reaction composition obtained through a reaction of polyalkylene glycol, a polyepoxy compound having a cyclic structure, and a polyamine having a cyclic structure at a prescribed ratio may solve the above problem.

The present invention relates to the following.

[1] An epoxy resin curing agent comprising a reaction composition (A) containing a reaction product of the following component (a12) and component (a3):

component (a12): a reaction composition containing a reaction product of a polyalkylene glycol (a1) and a polyepoxy compound having a cyclic structure (a2), and
component (a3): a polyamine having a cyclic structure,
wherein the mass ratio of the component (a1) to a total amount of the component (a1) and the component (a2), [(a1)/{(a1)+(a2)}], is from 0.28 to 0.50, and the reaction molar ratio between the component (a12) and the component (a3), [(a12)/(a3)], is from 1/4 to 1/2.

[2] The epoxy resin curing agent according to the item [1], wherein the component (a1) is polyethylene glycol.

[3] The epoxy resin curing agent according to the item [1] or [2], wherein the component (a2) is at least one selected from the group consisting of a polyfunctional epoxy resin having a glycidyloxy group derived from bisphenol A and a polyfunctional epoxy resin having a glycidyloxy group derived from bisphenol F.

[4] The epoxy resin curing agent according to any one of the items [1] to [3], wherein the component (a3) is at least one selected from the group consisting of metaxylylenediamine and isophoronediamine.

[5] An epoxy resin composition comprising a main agent epoxy resin and the epoxy resin curing agent according to any one of the items [1] to [4].

[6] The epoxy resin composition according to the item [5], wherein the epoxy resin composition comprises water.

[7] The epoxy resin composition according to the item [5] or [6], wherein the epoxy resin composition comprises a pigment.

[8] A paint comprising the epoxy resin composition according to any one of the items [5] to [7].

Advantageous Effects of Invention

According to the present invention, an epoxy resin curing agent applicable to a water-based epoxy resin composition, allowing a coating film excellent in appearance, hardness and water resistance to be formed therefrom, and an epoxy resin composition and a paint containing the curing agent can be provided.

Brief Description of Drawing

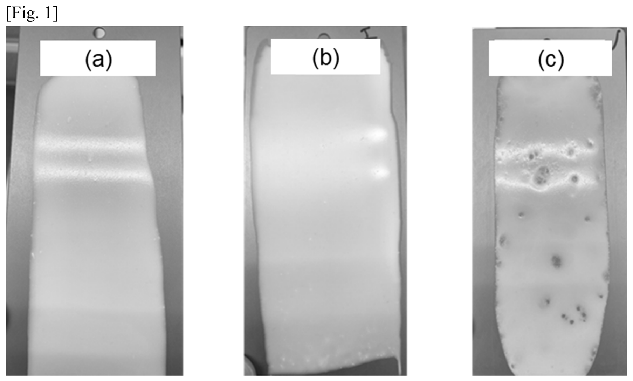

[Fig. 1] Figs. 1 (a) to (c) are photographs showing the appearance of a coating film formed from the epoxy resin composition in Example 1, Example 2, and Comparative Example 1, respectively.

Description of Embodiments

[Definition]

In the present specification, the term "water-based epoxy resin composition" means an epoxy resin composition containing at least a main agent epoxy resin, an epoxy resin curing agent, and a dispersion medium, and a main component of the dispersion medium is water. The term "main component" as used herein means that other components may be included without departing from the gist of the present invention, and the main component content is preferably 50 to 100 mass%, more preferably 70 to 100 mass%, and still more preferably 90 to 100 mass% of the total.

In the present specification, the term "reaction composition including a reaction product of X and Y" means a composition obtained by reacting X with Y, which contains not only a reaction product (adduct) of X and Y, but also a by-product other than the reaction product, and unreacted raw materials X, Y, etc.

[Epoxy resin curing agent]

The epoxy resin curing agent of the present invention (hereinafter, also referred to simply as "curing agent (of the present invention)") comprises a reaction composition (A) containing a reaction product of the following component (a12) and component (a3):

component (a12): a reaction composition containing a reaction product of a polyalkylene glycol (a1) and a polyepoxy compound having a cyclic structure (a2), and
component (a3): a polyamine having a cyclic structure,
wherein the mass ratio of the component (a1) to a total amount of the component (a1) and the component (a2), $[(a1)/\{(a1)+(a2)\}]$, is from 0.28 to 0.50, and the reaction molar ratio between the component (a12) and the component (a3), $[(a12)/(a3)]$, is from 1/4 to 1/2.

The curing agent of the present invention contains the reaction composition (A), so that application to a water-based epoxy resin composition can be achieved. Also, an epoxy resin composition and a paint containing the curing agent allow a coating film excellent in appearance, hardness and water resistance to be formed therefrom.

The reason why the effects are obtained in the present invention is presumed as follows, though not being clear.

The polyamine that is the component (a3) is a compound that can act as an epoxy resin curing agent. Since the component (a3) has a cyclic structure, it is presumed that use as epoxy resin curing agent contributes to improving the hardness and water resistance of the coating film of the resulting epoxy resin composition.

However, in the case of using a highly hydrophilic water-based epoxy resin as epoxy resin that is the main agent, the improvement in water resistance of the resulting coating film has been limited even with use of the polyamine that is the component (a3) as curing agent.

In contrast, the curing agent of the present invention contains a reaction composition (A) obtained by modifying the component (a3) with the component (a12) at a predetermined proportion. Since the reaction composition (A) has a structure derived from the component (a12), it has good dispersibility in a water-based epoxy resin composition. Further, it is presumed that the reaction composition (A) acts also as emulsifier for the epoxy resin that is the main agent. Due to the effect, it is presumed that with use of the curing agent of the present invention, preparation of a water-based epoxy resin composition is achieved even with use of a highly hydrophobic main agent epoxy resin, so that a coating film with good appearance can be formed.

In the curing agent of the present invention, it is presumed that with a mass ratio [(a1)/{(a1)+(a2)}] in a prescribed range, the dispersibility of the main agent epoxy resin is improved to have good appearance of the coating film, and both the hardness and the water resistance of the coating film of the resulting epoxy resin composition are also improved. Also, with a reaction molar ratio [(a12)/(a3)] in a prescribed range, it is presumed that sufficient curability for a curing agent can be obtained, and all of the appearance, the hardness, and the water resistance of the coating film of the resulting epoxy resin composition are improved.

<Component (a12): reaction composition>

The component (a12) is a reaction composition including a reaction product of a polyalkylene glycol (a1) and a polyepoxy compound having a cyclic structure (a2), and is a reaction intermediate for use in modifying a component (a3).

(Polyalkylene glycol (a1))

The alkylene in the component (a1) has preferably 2 to 4, more preferably 2 to 3, and still more preferably 2 carbon atoms from the viewpoints of water dispersibility of the reaction composition (A) and improvement in the appearance, hardness, and water resistance of the coating film formed from the resulting epoxy resin composition.

Specific examples of the component (a1) include polyethylene glycol, polypropylene glycol, polytrimethylene ether glycol, polytetramethylene ether glycol, and copolymers thereof.

Examples of the copolymers include a polyethylene glycol-polypropylene glycol copolymer, a polyethylene glycol-polytrimethylene ether glycol copolymer, a polyethylene glycol-polytetramethylene ether glycol copolymer, a polypropylene glycol-polytrimethylene ether glycol copolymer, and a polypropylene glycol-polytetramethylene ether glycol copolymer. These copolymers may be a block copolymer or a random copolymer.

The component (a1) may be used alone or in combination of two or more.

Among the above, from the viewpoint of the water dispersibility of the reaction composition (A) and from the viewpoint of improvement in the appearance, hardness and water resistance of the coating film formed from the resulting epoxy resin composition, the component (a1) is preferably at least one selected from the group consisting of polyethylene glycol, polypropylene glycol, and a polyethylene glycol-polypropylene glycol copolymer, more preferably at least one selected from the group consisting of polyethylene glycol and a polyethylene glycol-polypropylene glycol copolymer, and still more preferably polyethylene glycol.

The molecular weight of the component (a1) is not particularly limited, and from the viewpoint of the water dispersibility of the reaction composition (A) and from the viewpoint of improvement in the appearance, hardness, and water resistance of the coating film formed from the resulting epoxy resin composition, it is preferably 300 to 10,000, more preferably 300 to 8,000, still more preferably 300 to 5,000, furthermore preferably 300 to 3,000, furthermore preferably 300 to 2,000, and furthermore preferably 500 to 2,000.

(Polyepoxy compound having cyclic structure (a2))

Examples of the cyclic structure in the component (a2) include an aromatic ring, an alicyclic structure, and a heterocyclic structure.

The aromatic ring may be a single ring or a condensed ring, and examples thereof include a benzene ring, a naphthalene ring, an anthracene ring, a phenanthrene ring, and a tetracene ring, though not limited thereto. Among these, at least one selected from the group consisting of a benzene ring and a naphthalene ring is preferred, and a benzene ring is more preferred.

The alicyclic structure means a cyclic structure derived from an alicyclic hydrocarbon. The alicyclic structure may be saturated or unsaturated, and may be monocyclic or polycyclic. Also, the alicyclic structure may have a substituent. Examples of the substituent include an alkyl group having 1 to 8 carbon atoms, a hydroxy group, and an alkoxy group having 1 to 8 carbon atoms.

Examples of the alicyclic structure include a cycloalkane ring, a cycloalkene ring, a bicycloalkane ring, a bicycloalkene ring, and a tricycloalkane ring, though not limited thereto. Among these, a cycloalkane ring is preferred, a cycloalkane ring having 5 to 8 carbon atoms is more preferred, at least one selected from the group consisting of a cyclopropane ring and a cyclohexane ring is still more preferred, and a cyclohexane ring is furthermore preferred.

Examples of the heterocyclic structure include an isocyanurate ring.

The component (a2) may be any compound having two or more epoxy groups. From the viewpoint of reducing the viscosity of the resulting reaction composition (A), the number of epoxy groups in the component (a2) is preferably 2 to 5, more preferably 2 to 3, and still more preferably 2.

Specific examples of the component (a2) include biphenol diglycidyl ether, dihydroxynaphthalene diglycidyl ether, dihydroxy anthracene diglycidyl ether, a polyfunctional epoxy resin having a glycidylamino group derived from metaxylylenediamine, a polyfunctional epoxy resin having a glycidylamino group derived from paraxylylenediamine, a polyfunctional epoxy resin having a glycidylamino group derived from diaminodiphenylmethane, a polyfunctional epoxy resin having a glycidylamino group and a glycidyloxy group derived from paraaminophenol, a polyfunctional epoxy resin having a glycidyloxy group derived from bisphenol A, a polyfunctional epoxy resin having a glycidyloxy group derived from bisphenol F, a polyfunctional epoxy resin having a glycidyloxy group derived from phenol novolac, a polyfunctional epoxy resin having a glycidyloxy group derived from resorcinol, a polyfunctional epoxy resin having a glycidylamino group derived from 1,3-bis(aminomethyl)cyclohexane, a polyfunctional epoxy resin having a glycidyloxy group derived from hydrogenated bisphenol A, a polyfunctional epoxy resin having a glycidyloxy group derived from hydrogenated bisphenol F, and triglycidyl isocyanurate. These may be used singly or in combination of two or more thereof.

From the viewpoint of improvement in the appearance, hardness and water resistance of the coating film formed from the resulting epoxy resin composition, the component (a2) is preferably a polyepoxy compound having an aromatic ring or an alicyclic structure, more preferably a polyepoxy compound having an aromatic ring, still more preferably at least one selected from the group consisting of a polyfunctional epoxy resin having a glycidyloxy group derived from bisphenol A and a polyfunctional epoxy resin having a glycidyloxy group derived from bisphenol F, and furthermore preferably a polyfunctional epoxy resin having a glycidyloxy group derived from bisphenol A.

The epoxy equivalent weight of the component (a2) is preferably 80 to 400 g/equivalent weight, more preferably 100 to 300 g/equivalent weight, still more preferably 120 to 250 g/equivalent weight, furthermore preferably 140 to 220 g/equivalent weight, and furthermore preferably 150 to 200 g/equivalent weight, from the viewpoints of reducing the viscosity of the reaction composition (A) and improvement in the appearance, hardness, and water resistance of the coating film formed from the resulting epoxy resin composition.

The component (a12) is a reaction composition including a reaction product of a polyalkylene glycol (a1) and a polyepoxy compound having a cyclic structure (a2), and is obtained by reacting the component (a1) with the component (a2).

The mass ratio of the component (a1) to the total amount of the component (a1) and the component (a2), [(a1)/{(a1)+(a2)}], is from 0.28 to 0.50, preferably from 0.30 to 0.45, more preferably from 0.32 to 0.40, and still more preferably from 0.35 to 0.40, from the viewpoint of improvement in the appearance, hardness and water resistance of the coating film formed from the resulting epoxy resin composition.

The mass ratio [(a1)/{(a1)+(a2)}] is a value determined based on the masses of the component (a1) and the component (a2) for use in producing the component (a12).

The component (a12) is preferably a composition obtained by reacting the component (a1) and the component (a2) only as substrate. The term "substrate" does not include catalysts and solvents.

However, in production of the component (a12), substrates other than the component (a1) and the component (a2) may be further reacted without impairing the scope of the present invention. However, the amount of other substrates used is preferably 10 parts by mass or less, more preferably 5 parts by mass or less, still more preferably 2 parts by mass or less, furthermore preferably 1 part by mass or less, and furthermore preferably 0 parts by mass, relative to 100 parts by mass of the total amount of the component (a1) and the component (a2).

From the viewpoint of reactivity with the component (a3) and from the viewpoint of improvement in the appearance, hardness and water resistance of the coating film formed from the resulting epoxy resin composition, the epoxy equivalent weight of the component (a12) is preferably 200 to 1000 g/equivalent weight, more preferably 250 to 900 g/equivalent weight, still more preferably 300 to 800 g/equivalent weight, furthermore preferably 300 to 600 g/equivalent weight, and furthermore preferably 300 to 500 g/equivalent weight.

The epoxy equivalent weight of the component (a12) may be determined by titration according to the method described in Examples.

(Production method of component (a12))

The component (a12) may be produced by a known method, and examples thereof include a method including reacting the component (a1) with the component (a2) under heating conditions.

It is preferable that the reaction be performed in the presence of a catalyst from the viewpoint of improvement in production efficiency. The catalyst is preferably a complex of Lewis acid and ether or amine, and examples thereof include a boron trifluoride amine complex and a boron trifluoride ether complex. Among these, a boron trifluoride amine complex is preferred from the viewpoint of improvement in production efficiency. Examples of the boron trifluoride amine complex include a boron trifluoride monoethylamine complex, and a boron trifluoride triethanolamine complex.

The amount of the catalyst used is preferably 0.01 to 1 part by mass and more preferably 0.05 to 0.5 parts by mass, relative to 100 parts by mass of the total amount of the component (a1) and the component (a2), though not particularly limited thereto.

Although the reaction between the component (a1) and the component (a2) may be performed in a solvent, it is preferable that the reaction be performed without a solvent from the viewpoint of improvement in production efficiency. The reaction between the component (a1) and the component (a2) is preferably performed in the stream of an inert gas such as nitrogen gas from the viewpoint of improvement in production efficiency.

The heating temperature during the reaction between the component (a1) and the component (a2) is preferably 60 to 180°C, more preferably 80 to 160°C, and still more preferably 100 to 150°C, from the viewpoints of improvement in production efficiency and suppression of thermal degradation of the component (a1) and the component (a2). The time of reaction between the component (a1) and the component (a2) is usually in the range of 0.5 to 12 hours, preferably in the range of 0.5 to 6 hours, depending on the production scale, etc.

It is preferable that the reaction mixture of the component (a1) and the component (a2) obtained by the production method be used as component (a12) without purification. However, on an as needed basis, the component (a1) and the component (a2) as unreacted raw materials, catalysts, and impurities such as by-products may be removed from the reaction mixture, and the resulting purified product may be used as the component (a12).

<Component (a3): polyamine having cyclic structure>

The component (a3) is a compound (non-modified product) having at least one cyclic structure and at least two amino groups in the molecule.

The number of ring member carbon atoms in the cyclic structure of the component (a3) is preferably 5 to 20, more preferably 5 to 12, still more preferably 5 to 8, furthermore preferably 5 to 6, and furthermore preferably 6, from the viewpoint of improvement in the appearance, hardness, and water resistance of the coating film formed from the resulting epoxy resin composition.

Examples of the cyclic structure which the component (a3) has include an aromatic ring, an alicyclic structure, and a heterocyclic structure, in common with the cyclic structure defined in the component (a2). The aromatic ring, the alicyclic structure, and the preferred embodiment thereof are the same as described above.

Among the cyclic structures in the component (a3), the heterocyclic structure is preferably a cyclic structure containing at least one nitrogen atom as element constituting the cyclic structure, and examples thereof include a piperazine ring, a piperidine ring, a pyridine ring, and a pyrimidine ring.

The number of amino groups which the component (a3) has is preferably 2 to 4 and more preferably 2, from the viewpoints of reactivity with the component (a12) and reducing the viscosity of the reaction composition (A). Although the amino group may be directly bonded to the cyclic structure, it is preferable that the component (a3) have at least one amino group not directly bonded to the cyclic structure, from the viewpoint of improvement in the curing rate of the resulting reaction composition (A).

Specific examples of the component (a3) include an aromatic ring-containing aliphatic polyamine such as orthoxylylenediamine, metaxylylenediamine (MXDA), and paraxylylenediamine (PXDA); a polyamine having an alicyclic structure such as isophoronediamine (IPDA), menthenediamine, norbornanediamine, tricyclodecanediamine, adamantanediamine, diaminocyclohexane, 1,2-bis(aminomethyl)cyclohexane, 1,3-bis(aminomethyl)cyclohexane, 1,4-bis(aminomethyl)cyclohexane, 1,4-diamino-2-methylcyclohexane, 1,4-diamino-3,6-diethylcyclohexane, diaminodiethylmethylcyclohexane, 3,3'-dimethyl-4,4'-diaminodicyclohexylmethane (bis(4-amino-3-methylcyclohexyl)methane), 3,3',5,5'-tetramethyl-4,4'-diaminodicyclohexylmethane, and 4,4'-diaminodicyclohexylmethane; an aromatic polyamine such as phenylenediamine, diaminodiphenylmethane, diaminodiphenylsulfone, diethyltoluenediamine, and 2,2'-diethyl-4,4'-methylenedianiline; and a polyamine having a heterocyclic structure such as N-aminoethylpiperazine and N,N'-bis(aminoethyl)piperazine. One of these may be used alone, or two or more may be used in combination.

Among the above, from the viewpoint of improvement in the appearance, hardness, and water resistance of the coating film formed from the resulting epoxy resin composition, and from the viewpoint of improvement in the chemical resistance, the component (a3) is preferably a polyamine having an aromatic ring or an alicyclic structure, more preferably at least one selected from the group consisting of an aromatic ring-containing aliphatic polyamine and a polyamine having an alicyclic structure, still more preferably at least one selected from the group consisting of metaxylylenediamine and isophoronediamine, and from the viewpoint of fast curing, metaxylylenediamine is furthermore preferred.

<Reaction composition (A)>

The reaction composition (A) is a composition obtained by reacting the component (a12) with the component (a3), and includes a reaction product (adduct) of the component (a12) and the component (a3).

In the reaction composition (A), the reaction molar ratio between the component (a12) and the component (a3), [(a12)/(a3)], is 1/4 to 1/2, preferably from 1/3.8 to 1/2.3, more preferably from 1/3.5 to 1/2.5, and still more preferably from 1/3.3 to 1/2.7, from the viewpoint of improvement in the appearance, hardness and water resistance of the coating film formed from the resulting epoxy resin composition.

The reaction molar ratio [(a12)/(a3)] is the ratio between the number of moles of the component (a12) and the number of moles of the component (a3) for use in production of the reaction composition (A).

The number of moles of the component (a12) may be calculated from mass of component (a12) (g)/mass per mole of component (a12) X (g/mol).

Here, the mass per mole of component (a12) X (g/mol) is the value obtained by multiplying the epoxy equivalent weight (g/equivalent weight) of component (a12) by the number of epoxy groups in a molecule of "reaction product of a polyalkylene glycol (a1) and a polyepoxy compound having a cyclic structure (a2)". The epoxy equivalent weight of the component (a12) may be measured by the titration according to the method described in Examples, as described above.

The reaction composition (A) may be produced by reacting the component (a12) with the component (a3) by a known method, and examples of the method include reacting the component (a12) with the component (a3) under heating conditions.

Although the reaction between the component (a12) and the component (a3) may be performed in a solvent, it is preferable that the reaction be performed without a solvent from the viewpoint of improvement in production efficiency.

In the reaction between the component (a12) and the component (a3), it is preferable that the component (a12) be preheated and then the component (a3) be dropped thereto to cause the reaction, from the viewpoint of improvement in production efficiency and the viewpoint of suppression of thermal degradation of the component (a12) and the component (a3).

The heating temperature during reaction between the component (a12) and the component (a3) is preferably 40 to 150°C, more preferably 50 to 140°C, and still more preferably 60 to 120°C, from the viewpoints of improvement in production efficiency and suppression of thermal degradation of the component (a12) and the component (a3). The time of the reaction between the component (a12) and the component (a3) is usually in the range of 0.5 to 12 hours, and preferably in the range of 0.5 to 6 hours, depending on the production scale, etc.

For example, the reaction mixture of the component (a12) and the component (a3) obtained by the production method described above may be used as reaction composition (A) without purification. On an as needed basis, the component (a12) and the component (a3) as unreacted raw materials and impurities such as by-products may be removed from the reaction mixture, and the resulting purified product may be used as reaction composition (A).

It is preferable that the reaction composition (A) be a composition obtained by reacting the component (a12) and the component (a3) only. However, components other than the component (a12) and the component (a3) may be further reacted without impairing the scope of the present invention. The amount of the other components used is preferably 10 parts by mass or less, more preferably 5 parts by mass or less, still more preferably 2 parts by mass or less, furthermore preferably 1 part by mass or less, furthermore preferably 0.5 parts by mass or less, furthermore preferably 0.1 parts by mass or less, and furthermore preferably 0 parts by mass, relative to 100 parts by mass of the total amount of the component (a12) and the component (a3).

Examples of the other components include a compound reactable with at least one of the component (a12) and the component (a3). Examples thereof include an aromatic compound having at least one acidic group selected from the group consisting of a hydroxy group and a carboxy group.

The active hydrogen equivalent weight (AHEW) of the reaction composition (A) is preferably 800 or less, more preferably 500 or less, still more preferably 400 or less, furthermore preferably 300 or less, and furthermore preferably 200 or less. With a lower AHEW, higher curability is exhibited even with a small amount of blending into the epoxy resin composition. On the other hand, from the viewpoint of improvement in the appearance, hardness, and water resistance of the coating film formed from the resulting epoxy resin composition, the AHEW of the reaction composition (A) is preferably 45 or more, more preferably 70 or more.

As long as the curing agent of the present invention contains the reaction composition (A), inclusion of an epoxy resin curing agent other than the reaction composition (A) is not excluded. Examples of the epoxy resin curing agent other than the reaction composition (A) include a compound having two or more groups having an active hydrogen reactable with the epoxy group in the main agent epoxy resin for use in the epoxy resin composition. Examples of the type of the epoxy resin curing agent include an amine-based curing agent, a phenol-based curing agent, an acid anhydride-based curing agent, and a hydrazide-based curing agent.

However, the content of the reaction composition (A) in the epoxy resin curing agent is preferably 50 mass% or more, more preferably 60 mass% or more, still more preferably 70 mass% or more, furthermore preferably 80 mass% or more, furthermore preferably 90 mass% or more, furthermore preferably 95 mass% or more, and 100 mass% or less, from the viewpoint of improvement in the appearance, hardness and water resistance of a coating film formed from the resulting epoxy resin composition

The curing agent of the present invention may be used as curing agent solution diluted with a solvent to improve workability with reduced viscosity. Examples of the solvent include water and an aqueous solvent, and water is preferred from the viewpoints of environment and safety.

The content of the curing agent in the curing agent solution is preferably 1 to 80 mass%, more preferably 15 to 70 mass%, and still more preferably 20 to 60 mass%, from the viewpoint of improvement in workability with reduced viscosity, though not particularly limited.

The AHEW of the curing agent of the present invention is preferably 800 or less, more preferably 600 or less, and still more preferably 500 or less. With a lower AHEW, higher curability is exhibited even with a small amount of curing agent blended in the epoxy resin composition. On the other hand, from the viewpoint of improvement in the hardness and water resistance of the coating film formed from the resulting epoxy resin composition, the AHEW of the curing agent is preferably 45 or more, more preferably 70 or more, still more preferably 100 or more, furthermore preferably 200 or more, and furthermore preferably 300 or more. In the case of using the curing agent of the present invention in the form of a curing agent solution, it is preferable that the AHEW of the curing agent solution be in the above range.

[Epoxy resin composition]

The epoxy resin composition of the present invention (hereinafter, also referred to simply as "composition of the present invention") contains a main agent epoxy resin and the epoxy resin curing agent.

The composition of the present invention is preferably a water-based epoxy resin composition, and more preferably in the form of epoxy emulsion including a main agent epoxy resin and an epoxy resin curing agent dispersed in a dispersion medium containing water. In other words, it is preferable that the epoxy resin composition of the present invention contain water.

<Main agent epoxy resin>

The epoxy resin used as the main agent may be any one of a non-water-based epoxy resin and a water-based epoxy resin. In the present specification, the "non-water-based epoxy resin" means an epoxy resin that does not substantially contain water. The "water-based epoxy resin" is preferably an epoxy resin emulsion including a non-water-based epoxy resin emulsified and dispersed in water.

(Non-water-based epoxy resin)

The non-water-based epoxy resin may be any epoxy resin having a glycidyl group that reacts with an active hydrogen of the epoxy resin curing agent. From the viewpoint of improvement in the appearance, hardness and water resistance of the coating film of the resulting epoxy resin composition, it is preferable that the non-water-based epoxy resin contain an aromatic ring or an alicyclic structure in the molecule.

Specific examples of the non-water-based epoxy resin include at least one selected from the group consisting of an epoxy resin having a glycidylamino group derived from metaxylylenediamine, an epoxy resin having a glycidylamino group derived from 1,3-bis(aminomethyl)cyclohexane, an epoxy resin having a glycidylamino group derived from diaminodiphenylmethane, an epoxy resin having a glycidylamino group and a glycidyloxy group derived from paraaminophenol, an epoxy resin having a glycidyloxy group derived from bisphenol A, an epoxy resin having a glycidyloxy group derived from bisphenol F, an epoxy resin having a glycidyloxy group derived from phenol novolac, and an epoxy resin having a glycidyloxy group derived from resorcinol.

(Water-based epoxy resin)

Specific examples of the water-based epoxy resin include an epoxy resin emulsion containing the non-water-based epoxy resin and water. The non-water-based epoxy resin for use in the epoxy resin emulsion may be used alone or in combination of two or more.

The concentration of the non-water-based epoxy resin in the epoxy resin emulsion is not particularly limited, and preferably 30 mass% or more, more preferably 35 mass% or more, and usually 80 mass% or less.

The epoxy resin emulsion as water-based epoxy resin may further contain an emulsifier. The emulsifier for use in the epoxy resin emulsion may be any of a nonionic emulsifier, an anionic emulsifier, a cationic emulsifier, an amphoteric emulsifier, and a reactive group-containing emulsifier having a reactive group. From the viewpoint of having a wide range of choice in epoxy resin curing agents, at least one selected from the group consisting of a nonionic emulsifier, an anionic emulsifier, and a reactive group-containing emulsifier is preferred, and a nonionic emulsifier is more preferred.

Examples of the nonionic emulsifier include a polyether-based compound, an ester-based compound, and an alkanol amide-based compound. The emulsifier may be used alone or in combination of two or more.

In the case where the epoxy resin emulsion as water-based epoxy resin contains an emulsifier, the content of the emulsifier in the epoxy resin emulsion is preferably 0.1 to 40 parts by mass, more preferably 0.5 to 30 parts by mass, and still more preferably 1 to 20 parts by mass, relative to 100 parts by mass of the non-water-based epoxy resin. With a content of the emulsifier of 0.1 parts by mass or more relative to 100 parts by mass of the non-water-based epoxy resin, the emulsion stability of the non-water-based epoxy resin is good, and with a content of 40 parts by mass or less, the appearance, hardness, water resistance, etc. of the coating film of the resulting epoxy resin composition can be maintained well.

Among the above, from the viewpoint of improvement in the appearance, hardness and water resistance of the coating film of the resulting epoxy resin composition, the main agent epoxy resin is preferably a non-water-based epoxy resin including at least one selected from the group consisting of an epoxy resin having a glycidylamino group derived from metaxylylenediamine, an epoxy resin having a glycidyloxy group derived from bisphenol A, and an epoxy resin having a glycidyloxy group derived from bisphenol F, as main component, or a water-based epoxy resin composed of epoxy resin emulsion including these non-water-based epoxy resin emulsified and dispersed in water.

Among the non-water-based epoxy resins, one having at least one selected from the group consisting of an epoxy resin having a glycidyloxy group derived from bisphenol A and an epoxy resin having a glycidyloxy group derived from bisphenol F as main component is more preferred, and one having an epoxy resin having a glycidyloxy group derived from bisphenol A as main component is still more preferred. The term "main component" as used herein means allowing other components to be included in the epoxy resin without departing from the gist of the present invention, and means that the main component content is preferably 50 to 100 mass%, more preferably 70 to 100 mass%, and still more preferably 90 to 100 mass% of the total.

The non-water-based epoxy resin may be any one of a solid epoxy resin and a liquid epoxy resin. In the present invention, "solid epoxy resin" means an epoxy resin in a solid state at room temperature (25°C), and "liquid epoxy resin" means an epoxy resin in a liquid state at room temperature (25°C).

The epoxy equivalent weight of the main agent epoxy resin is preferably 150 g/equivalent weight or more from the viewpoint of improvement in the hardness and water resistance of the coating film of the resulting epoxy resin composition, and preferably 1000 g/equivalent weight or less, more preferably 800 g/equivalent weight or less, still more preferably 500 g/equivalent weight or less, and furthermore preferably 300 g/equivalent weight or less from the viewpoint of the curability of the epoxy resin composition.

In the case where the main agent epoxy resin is a water-based epoxy resin, it is preferable that the epoxy equivalent weight of the components excluding the dispersion medium from the epoxy resin emulsion as water-based epoxy resin (a solid content including the non-water-based epoxy resin and the emulsifier) be also in the above range.

(Content ratio)

The content ratio between the main agent epoxy resin and the epoxy resin curing agent in the epoxy resin composition defined as the number of epoxy groups in the main agent epoxy resin relative to the number of active hydrogens in the epoxy resin curing agent (Number of epoxy groups in main agent epoxy resin/Number of active hydrogens in epoxy resin curing agent) is preferably 1/0.5 to 1/2, more preferably 1/0.75 to 1/1.5, and still more preferably 1/0.8 to 1/1.2.

<Pigment>

The epoxy resin composition may further contain a pigment. The type of pigment is not particularly limited, and any of an organic pigment and an inorganic pigment may be used depending on the application of the composition. Alternatively, these may be used in combination.

Examples of the organic pigment include a polycyclic pigment such as an azo lake, an azo pigment, a phthalocyanine pigment, a perylene pigment, a perinone pigment, an anthraquinone pigment, a quinacridone pigment, a dioxazine pigment, a diketopyrrolopyrrole pigment, a thioindigo pigment, an isoindolinone pigment and a quinophthalone pigment; a dye lake such as a basic dye-type lake and an acid dye-type lake; a nitro pigment, a nitroso pigment, an aniline black, and a daylight fluorescent pigment.

Examples of the inorganic pigment include an inorganic white pigment such as titanium oxide, iron oxide, calcium carbonate, barium sulfate, and aluminum hydroxide, as well as barium yellow, cadmium red, chrome yellow, and carbon black.

In the case where the epoxy resin composition is applied to a paint, it is preferable that an inorganic pigment be contained therein, more preferable that an inorganic white pigment be contained therein, and still more preferable that titanium oxide be contained therein, from the viewpoints of weather resistance and hiding power.

The pigment may be used alone or in combination of two or more.

In the case where the epoxy resin composition contains a pigment, the content of the pigment in the composition is preferably 1 to 50 mass%, more preferably 5 to 50 mass%, still more preferably 5 to 40 mass%, and furthermore preferably 5 to 25 mass%. With a content of 1 mass% or more, coloring properties can be imparted, and with a content of 50 mass% or less, the hardness, water resistance, etc. of a coating film of the resulting epoxy resin composition can be maintained.

The epoxy resin composition may further contain other components, such as a filler other than pigments, a modifying component such as plasticizer, a flow control component such as thixotropic agent, a leveling agent, a dispersant, an antifoaming agent, and a tackifier, depending on the application.

However, from the viewpoints of curability and improvement in the water resistance of a coating film of the resulting epoxy resin composition, the total content of the main agent epoxy resin and the epoxy resin curing agent in the epoxy resin composition is preferably 10 to 100 mass%, more preferably 20 to 80 mass%, still more preferably 20 to 70 mass%, and furthermore preferably 20 to 60 mass%.

As described above, since the composition of the present invention is preferably a water-based epoxy resin composition, it is preferable that water be contained therein.

The content of water in the epoxy resin composition is preferably 5 mass% or more, more preferably 10 mass% or more, still more preferably 15 mass% or more, furthermore preferably 20 mass% or more, and furthermore preferably 25 mass% or more. The upper limit of the water content may be appropriately adjusted, usually 80 mass% or less, preferably 70 mass% or less, more preferably 60 mass% or less, and still more preferably 50 mass% or less.

The term water content here means the total amount of water contained in the epoxy resin composition, and in the case where the main agent epoxy resin or the epoxy resin curing agent contains water, the amount of water in the main agent epoxy resin and the epoxy resin curing agent is also included.

The epoxy resin composition may further contain an aqueous solvent other than water. Examples of the aqueous solvent include a protic polar solvent such as methanol, ethanol, 1-propanol, 2-propanol, 1-butanol, 2-butanol, 2-methoxyethanol, 2-ethoxyethanol, 2-propoxyethanol, 2-butoxyethanol, 1-methoxy-2-propanol [propylene glycol monomethyl ether], 1-ethoxy-2-propanol, and 1-propoxy-2-propanol, and an aprotic polar solvent such as N,N-dimethylformamide, N,N-dimethylacetamide, dimethylsulfoxide, and N-methylpyrrolidone. These may be used singly or in combinations of two or more thereof. Among the above, from the viewpoint of improvement in workability with reduced viscosity of the composition, a protic polar solvent is preferred, and at least one selected from the group consisting of methanol, ethanol, 1-propanol, 2-propanol, 2-methoxyethanol, and 1-methoxy-2-propanol[propylene glycol monomethyl ether] is more preferred.

In the case where the epoxy resin composition contains the aqueous solvent, the content of the aqueous solvent in the composition is preferably 0.1 mass% or more, and more preferably 0.3 mass% or more. The upper limit of the content of aqueous solvent may be appropriately adjusted, usually 50 mass% or less, preferably 30 mass% or less, more preferably 20 mass% or less, and still more preferably 10 mass% or less.

Also, from the viewpoint of improvement in workability, the non-volatile content concentration (N.V.) of the epoxy resin composition is preferably 10 to 100 mass%, more preferably 20 to 90 mass%, still more preferably 20 to 80 mass%, and furthermore preferably 30 to 70 mass%.

The production method of the epoxy resin composition is not particularly limited, and the composition may be produced by mixing a main agent epoxy resin, an epoxy resin curing agent, and a pigment and other components on an as needed basis, using a known method and apparatus.

The main agent epoxy resin and the epoxy resin curing agent may be dissolved in water or an aqueous solvent in advance to prepare a solution, and then mixed. In the case where a pigment is contained, it is preferable that the pigment be dispersed in water or an aqueous solvent in advance and then mixing be performed.

[Cured product]

The present invention can provide a cured product of the epoxy resin composition. The cured product includes an epoxy resin composition of the present invention cured by a known method. The curing conditions of the epoxy resin composition are appropriately selected depending on the application and form, and are not particularly limited.

The form of the cured product is also not particularly limited and may be selected depending on the application. For example, in the case where the epoxy resin composition is a paint, the cured product of the epoxy resin composition is usually in a film form.

[Paint]

The present invention provides a paint that contains the epoxy resin composition. The paint of the present invention contains the epoxy resin composition, so that a coating film having good appearance, hardness and water resistance can be formed therefrom.

Examples of the paint include a paint for corrosion resistance, a paint for ships, a paint for tanks, a paint for pipe interior, a paint for exterior, and a paint for floor materials. The paint for corrosion resistance is used for, for example, ships, bridges, buildings such as factories, and other iron structures on land and sea.

The content of the epoxy resin composition in a paint is preferably 50 mass% or more, more preferably 70 mass% or more, still more preferably 80 mass% or more, furthermore preferably 90 mass% or more, furthermore preferably 95 mass% or more, and may be 100 mass%, from the viewpoint of improvement in the appearance, hardness, and water resistance of the coating film.

<Application>

The epoxy resin curing agent and the epoxy resin composition of the present invention are suitably used for adhesives, floor materials, sealants, polymer cement mortars, gas barrier coatings, primers, screeds, top coats, sealing materials, crack repair materials, and concrete materials, as well as the paint.

Examples

The present invention will be described in detail as follows with reference to Examples and Comparative Examples, though the present invention is not limited to the following Examples. The epoxy resin curing agent and the epoxy resin composition were evaluated by the following methods.

(Dry to the touch)

A zinc phosphate-treated steel sheet (manufactured by PALTECH Co., Ltd.; SPCC-SD PB-N144 $0.8 \times 70 \times 150$ mm) was used as a base material. An epoxy resin composition of each example was applied using an applicator onto the base material to form a coating film (coating film thickness immediately after application: 200 $\mu$m). This coating film was kept under the conditions at 23°C and 50% R.H., and after 1 day passed, was evaluated by finger contact according to the following criteria.

Ex: Excellent (there is no sticking of the coating film even when the thumb is pressed with a force of about 50 N, and no fingerprints remain)
G: Good (there is no sticking of the coating film even when the thumb is pressed with a force of about 50 N, but fingerprints remain after finger contact)
F: Fair (there is sticking of the coating film when the thumb is pressed with a force of about 50 N)
P: Poor (there is sticking of the coating film when the thumb is pressed with a force of about 5 N)

(Pencil Hardness)

An epoxy resin composition of each example was applied onto a base material (zinc phosphate-treated steel sheet) in the same manner as described above to form a coating film (thickness immediately after application: 200 $\mu$m). This coating film was kept under the conditions of 23°C and 50% R.H., and after 1, 2, and 7 days passed, the pencil hardness was measured in accordance with JIS K5600-5-4:1999.

(Water Resistance Spot Test)

An epoxy resin composition of each example was applied onto a base material (zinc phosphate-treated steel sheet) in the same manner as described above to form a coating film (thickness immediately after application: 200 $\mu$m). This coating film was kept under the conditions of 23°C and 50% R.H., and after 1, 2, and 7 days passed, 2 to 3 drops of pure water were dropped on the surface of the coating film with a dropper, and the portion was covered with a 50 mL screw tube bottle. After 24 hours passed, water was wiped off, and the appearance was observed visually and evaluated according to the following criteria.

Ex: Excellent (no change at all)
G: Good (slight change, but no problem with use)
F: Fair (some whitening)
P: Poor (whitening)

(Curing Rate (RCI))

An epoxy resin composition of each example was applied onto a glass plate (manufactured by Taiyu Machinery Co., Ltd., 25×348×2.0 mm) under the conditions at 23°C and 50% R.H., by using an applicator of 76 μm, thereby forming a coating film. The glass plate on which the coating film was formed was set on a paint drying time measuring instrument (manufactured by Taiyu Machinery Co., Ltd.), the striations when the needle of the measuring instrument scratched the surface of the coating film were observed, and the time to reach each drying step (Set to Touch, Dust Free, and Dry Through) was measured according to the following criteria. A shorter time indicates a higher curing rate.

Set to Touch: time taken until when traces of the needle start to remain on the glass plate
Dust Free: time taken until when traces of the needle emerge from the middle of the coating film onto the surface of the coating film
Dry Through: time taken until when no traces of the needle remain on the coating film

(Appearance of Coating Film)

An epoxy resin composition of each example was applied onto a base material (zinc phosphate-treated steel sheet) in the same manner as described above to form a coating film (thickness immediately after application: 200 μm). This coating film was kept under the conditions of 23°C and 50% R.H. The appearance thereof after 7 days passed was observed visually to evaluate smoothness according to the following criteria.

<Smoothness>

Ex: Excellent (there is no unevenness)
G: Good (there is slight unevenness, but there is no problem with use)
F: Fair (there is some unevenness)
P: Poor (there is cissing or unevenness on the whole surface)

(Adhesion)

A cross-cut test was performed by the method in accordance with JIS K 5600-5-6:1999 to evaluate the adhesion of the coating film to a substrate. Each of the epoxy resin compositions of Examples 1 to 2 and Comparative Example 1 was applied to a base material (zinc phosphate-treated steel sheet) in the same manner as described above to form a coating film (thickness immediately after application: 200 μm). This coating film was kept under conditions at 23°C and 50% R.H., and after 14 days passed, six cuts were made on the surface of the coating film to a depth reaching the base material using a box cutter, so that 25 squares were made. The cuts were spaced 1 mm apart. A cellophane tape was then firmly pressed onto the square portion, the end of the tape was peeled off at a 45° angle in all at once, and the number of squares remaining on the base material was visually checked. The test results based on the six-level classification of 0 to 5 specified in JIS K 5600-5-6:1999 are shown in Table 2. Classification "0" is the best and "5" is the worst. The number X of squares remaining on the base material is shown in parentheses as "X/25" in Table 2. A larger value of X indicates better adhesion of the coating film to the base material.

Production Example 1 (Preparation of reaction composition solution A1)

(Production of component (a12) (reaction composition containing PEG-modified DGEBA))

A separable flask having an internal volume of 300 mL equipped with a stirrer, a thermometer, a nitrogen inlet tube, a dropping funnel and a cooling tube was charged with 30 g (0.03 mol) of polyethylene glycol ("PEG1000" manufactured by FUJIFILM Wako Pure Chemical Corporation) as component (a1) and 53.5 g (0.144 mol) of a polyfunctional epoxy resin having a glycidyloxy group derived from bisphenol A (bisphenol A diglycidyl ether (DGEBA), "jER828" manufactured by Mitsubishi Chemical Corporation, epoxy equivalent weight: 186 g/equivalent weight) as component (a2). The mixture was heated to 120°C while stirring under a nitrogen stream, and then 0.2 g of boron trifluoride-mono-ethylamine complex ($BF_3 \cdot EtNH_2$) as reaction catalyst was dropped therein. After completion of the dropping, the mixture was heated to 140°C and stirred for 1 hour to cause a reaction to obtain a reaction composition containing PEG-modified DGEBA as component (a12). The epoxy equivalent weight of the resulting reaction composition was 395 g/equivalent weight.

The epoxy equivalent weight of the reaction composition containing PEG-modified DGEBA was determined by dissolving 0.1 g of PEG-modified DGEBA in 20 mL of tetraethylammonium bromide acetic acid solution (80 g/L) and titrating with perchloric acid-acetic acid solution (0.1 N), using a potentiometric titrator "AT-710" (manufactured by Kyoto Electronics Manufacturing Co., Ltd.), and calculating the epoxy equivalent weight from the titer at the end point according to the following formula. The titer was calculated as the average of two measured values.

$$\text{Epoxy equivalent weight (g/eq)}=1000/(0.1{\times}f{\times}V/W)$$

f: factor of 0.1 mol/L perchloric acid-acetic acid solution (N/10)
V: titer (mL) of 0.1 mol/L perchloric acid-acetic acid solution (N/10)
W: sample weight (g)

The epoxy equivalent weight value multiplied by two was presumed to be the molar amount (g/mol) of the reaction composition containing PEG-modified DGEBA (component (a12)).

(Production of reaction composition A1)

The component (a12) in the separable flask was cooled to 80°C, and 43.2 g (0.318 mol) of metaxylylenediamine (MXDA, manufactured by Mitsubishi Gas Chemical Company, Inc.) as component (a3) was dropped thereto over 1 hour. After completion of the dropping, the mixture was stirred at 80°C for 1 hour to cause a reaction, so that a reaction composition A1 containing a reaction product of the component (a12) and MXDA was obtained. The reaction molar ratio [(a12)/(a3)] between the component (a12) and the component (a3) used in the production of the reaction composition A1 was 1/3.

(Preparation of reaction composition solution A1)

The reaction composition A1 was diluted with pure water to a non-volatile content (N.V.) of 28 mass%. Further, 5 parts by mass of propylene glycol monomethyl ether (PGM) was added to 100 parts by mass of the reaction composition A1, so that a reaction composition solution A1 with a non-volatile content of 26.7 mass% was obtained. The active hydrogen equivalent weight (AHEW) of the reaction composition solution A1 (total amount including water and PGM) was 449.

Production Example 2 (Preparation of reaction composition solution A2)

The same operation was performed as in Production Example 1 except that 54.0 g of isophoronediamine (IPDA) was used as component (a3) instead of metaxylylenediamine in Production Example 1, so that a reaction composition A2 containing a reaction product of the component (a12) and IPDA, and a reaction composition solution A2 containing the reaction composition A2 were obtained.
The reaction molar ratio [(a12)/(a3)] between the component (a12) and the component (a3) used in the production of the reaction composition A2 was 1/3. The AHEW of the reaction composition solution A2 (total amount including water and PGM) was 488.

Production Example 3 (Preparation of comparative reaction composition solution A')

The same operation was performed as in Production Example 1 except that the amount of metaxylylenediamine used in Production Example 1 was changed to 72.0 g (0.530 mol), so that a comparative reaction composition A' containing a reaction product of the component (a12) and MXDA was obtained. Further, the comparative reaction composition A' was diluted with pure water to a non-volatile content of 50 mass%, so that a comparative reaction composition solution A' was obtained.
The reaction molar ratio [(a12)/(a3)] between the component (a12) and the component (a3) used in the production of the comparative reaction composition A' was 1/5. The AHEW of the comparative reaction composition solution A' (total amount including water and PGM) was 167.

Production Example 4 (Production of pigment-containing main agent solution 1)

An epoxy resin solution was prepared by mixing 50.00 g of a polyfunctional epoxy resin having a glycidyloxy group derived from bisphenol A (bisphenol A diglycidyl ether (DGEBA), "jER828" manufactured by Mitsubishi Chemical Corporation, epoxy equivalent weight: 186 g/equivalent weight) and 5.00 g of propylene glycol monomethyl ether.

On the other hand, the components shown in a column "Pigment paste" in Table 1 were blended in the amounts shown in Table 1 respectively, and the mixture was stirred, so that a pigment paste was prepared.

The epoxy resin solution and the pigment paste were mixed, so that a main agent solution 1 that contained a pigment having the composition shown in Table 1 was obtained. The amounts blended (g) and mass% shown in Table 1 are all on an as-is basis.

[Table 1]

| Table 1 | | | |
|---|---|---|---|
| Pigment-containing main agent solution 1 | | Amount blended (g) | Mass% |
| Epoxy resin solution | Epoxy resin jER828 *1 | 50.00 | 39.86 |
| | Propylene glycol monomethyl ether | 5.00 | 3.99 |
| Pigment paste | Pigment (titanium oxide) CR-97 *2 | 50.00 | 39.86 |
| | Dispersant BYK-2081 *3 | 3.33 | 2.65 |
| | Antifoaming agent AQ-530S *4 | 0.92 | 0.73 |
| | Propylene glycol monomethyl ether | 1.59 | 1.27 |
| | Pure water | 14.60 | 11.64 |
| Total | | 125.44 | 100.00 |
| N.V.(%) | | 83.11 | |

The components listed in Table 1 are as follows.

*1: "jER828" manufactured by Mitsubishi Chemical Corporation, a polyfunctional epoxy resin having a glycidyloxy group derived from bisphenol A, bisphenol A diglycidyl ether (DGEBA), epoxy equivalent weight: 186 g/equivalent weight

*2: "CR-97" manufactured by Ishihara Sangyo Kaisha, Ltd., white titanium oxide (rutile type), average particle size: 0.25 $\mu$m

*3: "Disper BYK-2081" manufactured by BYK Japan K.K.

*4: "Disparlon AQ-530S" manufactured by Kusumoto Chemicals, Ltd.

Example 1 (Preparation and evaluation of epoxy resin composition)

The reaction composition solution A1 obtained in Production Example 1 was used as the curing agent solution, and the pigment-containing main agent solution 1 obtained in Production Example 4 was used as the main agent solution. These were mixed in the proportion shown in Table 2, and water was further added and mixed to have a non-volatile content of 40 mass%, so that an epoxy resin composition having the composition shown in Table 2 was prepared. The resulting epoxy resin composition was subjected to the evaluation described above. The results are shown in Table 2.

Example 2

An epoxy resin composition was prepared and evaluated in the same manner as in Example 1, except that the reaction composition solution A2 obtained in Production Example 2 was used instead of the reaction composition solution A1 in Example 1. The results are shown in Table 2.

Comparative Example 1

As the curing agent solution, a commercially available water-based epoxy resin curing agent "Cardolite NX-8101" (manufactured by Cardolite Corporation, solid content concentration: 50 mass%, AHEW (as-is basis): 270) was used, and as the main agent solution, the pigment-containing main agent solution 1 obtained in Production Example 4 was used. These were mixed in the proportion shown in Table 2, and water was further added and mixed to have a non-volatile content of 54 mass%, so that an epoxy resin composition having the composition shown in Table 2 was prepared. The evaluation of the resulting epoxy resin composition was performed. The results are shown in Table 2.

[Table 2]

Table 2

| | | | Example | | Comparative Example |
|---|---|---|---|---|---|
| | | | 1 | 2 | 1 |
| Epoxy resin composition blended | Main agent solution | Type | Pigment-containing main agent solution 1 | | |
| | | Amount blended (g) | 100 | 100 | 100 |
| | Curing agent solution | Type | Reaction composition solution A1 | Reaction composition solution A2 | NX-8101 |
| | | (a1) | PEG1000 | PEG1000 | - |
| | | (a2) | jER828 | jER828 | - |
| | | (a3) | MXDA | IPDA | - |
| | | Mass ratio [(a1)/{(a1)+(a2)}] | 0.36 | 0.36 | - |
| | | Reaction molar ratio [(a12)/(a3)] | 1/3 | 1/3 | - |
| | | Amount blended (g) | 96 | 104 | 58 |
| | Water | Amount blended (g) | 71 | 68 | 51 |
| | N.V.(%) | | 40 | 40 | 54 |
| | Content of epoxy resin (mass%) | | 23 | 23 | 30 |
| | Content of epoxy resin curing agent (mass%) | | 10 | 10 | 14 |
| | Content of pigment (mass%) | | 10 | 10 | 13 |
| | Number of epoxy groups in main agent/Number of active hydrogen in curing agent | | 1/1 | 1/1 | 1/1 |
| Evaluation result | Dry to the touch (after 1 day passed) | | Ex | Ex | Ex |
| | Pencil hardness (after 1/2/7 days passed) | | H/H/2H | 2H/3H/3H | B/HB/H |
| | Water resistance spot (after 1/2/7 days passed) | | F/F/F | F/F/F | P/P/P |
| | Curing rate (RCI) | Set to touch (hour: minute) | 0:01 | 0:01 | 0:01 |
| | | Dust free (hour: minute) | 1:45 | 3:00 | 2:00 |
| | | Dry through (hour: minute) | 5:00 | 7:30 | 7:00 |
| | Appearance of coating film | Smoothness | G | G | P |
| | Adhesion | Crosscut test | 0(25/25) | 0(25/25) | 5(4/25) |

Example 3

The reaction composition solution A1 obtained in Production Example 1 was used as the curing agent solution, and a polyfunctional epoxy resin having a glycidyloxy group derived from bisphenol A (bisphenol A diglycidyl ether (DGEBA), "jER828" manufactured by Mitsubishi Chemical Corporation, epoxy equivalent weight: 186 g/equivalent weight) was used as the main agent. These were mixed in the proportion shown in Table 3, and water was further added and mixed to have a non-volatile content of 40 mass%, so that an epoxy resin composition having the composition shown in Table 3 was prepared. The resulting epoxy resin composition was subjected to the evaluation described above. The results are shown in Table 3.

Comparative Example 2

An epoxy resin composition was prepared and evaluated in the same manner as in Example 3, except that the comparative reaction composition solution A' obtained in Production Example 3 was used instead of the reaction composition solution A1 in Example 3, and water was added and mixed to have a non-volatile content of 50 mass%. The results are shown in Table 3.

[Table 3]

Table 3

| | | | | Example | Comparative Example |
|---|---|---|---|---|---|
| | | | | 3 | 2 |
| Epoxy resin composition blended | Main agent | Type | | jER828 | jER828 |
| | | Amount blended (g) | | 100 | 100 |
| | Curing agent solution | Type | | Reaction composition solution A1 | Comparative Reaction composition solution A' |
| | | (a1) | | PEG1000 | PEG1000 |
| | | (a2) | | jER828 | jER828 |
| | | (a3) | | MXDA | MXDA |
| | | Mass ratio [(a1)/{(a1)+(a2)}] | | 0.36 | 0.36 |
| | | Reaction molar ratio [(a12)/(a3)] | | 1/3 | 1/5 |
| | | Amount blended (g) | | 241 | 90 |
| | Water | Amount blended (g) | | 70 | 100 |
| | N.V.(%) | | | 40 | 50 |
| | Content of epoxy resin (mass%) | | | 24 | 34 |
| | Content of epoxy resin curing agent (mass%) | | | 16 | 16 |
| | Number of epoxy groups in main agent/Number of active hydrogen in curing agent | | | 1/1 | 1/1 |
| Evaluation result | Dry to the touch (after 1 day passed) | | | Ex | Ex |
| | Pencil hardness (after 1/2/7 days passed) | | | 2H/2H/2H | H/2H/3H |
| | Water resistance spot (after 1/2/7 days passed) | | | Ex/Ex/Ex | F/F/F |
| | Curing rate (RCI) | Set to touch (hour: minute) | | 0:01 | 0:01 |
| | | Dust free (hour: minute) | | 2:00 | 2:30 |
| | | Dry through (hour: minute) | | 3:30 | 9:45 |
| | Appearance of coating film | Smoothness | | G | G |

As can be seen from Tables 2 and 3, from the epoxy resin composition containing the epoxy resin curing agent of the present invention, a coating film excellent in all of the appearance, hardness, and water resistance can be formed with or without containing a pigment.

Figs. 1(a) to (c) are photographs showing the appearance of the coating films formed from the epoxy resin compositions of Example 1, Example 2, and Comparative Example 1, respectively. It can be seen that the coating films obtained in Examples 1 and 2 have good smoothness (Figs. 1(a) and (b)), while the coating film obtained in Comparative Example 1 has significantly poor smoothness.

Industrial Applicability

According to the present invention, an epoxy resin curing agent applicable to a water-based epoxy resin composition, allowing a coating film excellent in appearance, hardness and water resistance to be formed therefrom, and an epoxy resin composition and a paint containing the curing agent can be provided.

**Claims**

1. An epoxy resin curing agent comprising a reaction composition (A) containing a reaction product of the following component (a12) and component (a3):

   component (a12): a reaction composition containing a reaction product of a polyalkylene glycol (a1) and a polyepoxy compound having a cyclic structure (a2), and
   component (a3): a polyamine having a cyclic structure,
   wherein a mass ratio of the component (a1) to a total amount of the component (a1) and the component (a2), [(a1)/{(a1)+(a2)}], is from 0.28 to 0.50, and a reaction molar ratio between the component (a12) and the component (a3), [(a12)/(a3)], is from 1/4 to 1/2.

2. The epoxy resin curing agent according to claim 1, wherein the component (a1) is polyethylene glycol.

3. The epoxy resin curing agent according to claim 1 or 2, wherein the component (a2) is at least one selected from the group consisting of a polyfunctional epoxy resin having a glycidyloxy group derived from bisphenol A and a polyfunctional epoxy resin having a glycidyloxy group derived from bisphenol F.

4. The epoxy resin curing agent according to any one of claims 1 to 3, wherein the component (a3) is at least one selected from the group consisting of metaxylylenediamine and isophoronediamine.

5. An epoxy resin composition comprising a main agent epoxy resin and the epoxy resin curing agent according to any one of claims 1 to 4.

6. The epoxy resin composition according to claim 5, wherein the epoxy resin composition comprises water.

7. The epoxy resin composition according to claim 5 or 6, wherein the epoxy resin composition comprises a pigment.

8. A paint comprising the epoxy resin composition according to any one of claims 5 to 7.

[Fig. 1]

## INTERNATIONAL SEARCH REPORT

| International application No. |
|---|
| **PCT/JP2023/039172** |

| A. | CLASSIFICATION OF SUBJECT MATTER |
|---|---|

*C08G 59/50*(2006.01)i; *C09D 163/00*(2006.01)i
FI: C08G59/50; C09D163/00

According to International Patent Classification (IPC) or to both national classification and IPC

| B. | FIELDS SEARCHED |
|---|---|

Minimum documentation searched (classification system followed by classification symbols)

C08G59/50; C09D163/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 9-176292 A (ASAHI DENKA KOGYO KK) 08 July 1997 (1997-07-08) claims, paragraph [0081], examples | 1-8 |
| A | JP 4-351628 A (ASAHI DENKA KOGYO KK) 07 December 1992 (1992-12-07) entire text | 1-8 |
| A | CN 111849143 A (ZENGCHENG HUISHUN CHEMICAL CO., LTD.) 30 October 2020 (2020-10-30) entire text | 1-8 |
| A | CN 115028803 A (HUBEI SANKESHU NEW MATERIAL TECHNOLOGY CO., LTD.) 09 September 2022 (2022-09-09) entire text | 1-8 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **22 November 2023** | **05 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/039172**

| Patent document cited in search report | | | Publication date (day/month/year) | Patent family member(s) | Publication date (day/month/year) |
|---|---|---|---|---|---|
| JP | 9-176292 | A | 08 July 1997 | (Family: none) | |
| JP | 4-351628 | A | 07 December 1992 | (Family: none) | |
| CN | 111849143 | A | 30 October 2020 | (Family: none) | |
| CN | 115028803 | A | 09 September 2022 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2010535259 A